# EUROPÄISCHE PATENTSCHRIFT

(11) **EP 3 616 274 B1**
(45) Veröffentlichungstag und Bekanntmachung des Hinweises auf die Patenterteilung: **15.03.2023**
(21) Anmeldenummer: 18720215.5
(22) Anmeldetag: 24.04.2018
(51) Int. Cl.: H01R 43/042

(54) **HANDBETÄTIGBARES ZANGENWERKZEUG**
HAND-ACTUATABLE PLIER TOOL
OUTIL FORMANT PINCE ACTIONNABLE MANUELLEMENT

(30) Priorität: 26.04.2017 DE 102017108910
(43) Veröffentlichungstag der Anmeldung: 04.03.2020
(73) Patentinhaber: Weidmüller Interface GmbH & Co. KG, 32758 Detmold (DE)
(72) Erfinder: BRÖKER, Thilo, 32758 Detmold (DE); SCHINDLER, Rico, 32457 Porta Westfalica (DE); DAHLMANN, Markus, 33378 Rheda-Wiedenbrück (DE)
(74) Vertreter: Specht, Peter
(86) Internationale Anmeldenummer: PCT/EP2018/060425
(87) Internationale Veröffentlichungsnummer: WO 2018/197457

(56) Entgegenhaltungen:
- AU-B2- 503 277
- DE-A1-102007 050 176
- DE-A1-102011 050 718
- DE-U1- 29 806 179
- DE-U1-202010 005 761
- DE-U1-202014 105 571

## Beschreibung

Die vorliegende Erfindung betrifft ein handbetätigbares Zangenwerkzeug, insbesondere zur Verarbeitung von Kabeln, gemäß dem Oberbegriff des Anspruchs 1.

Bei gattungsgemäßen Zangenwerkzeugen, beispielsweise bekannt aus der DE 20 2010 005 761 U oder der DE 20 2014 105 571 U1, ist es bekannt, eine als elektronische Zähleinrichtung ausgebildete elektronische Überwachungseinheit vorzusehen, die die Anzahl der mit dem Zangenwerkzeug vorgenommen Betätigungen zählt.

Die elektronische Zähleinrichtung der DE 20 2010 005 761 U ist dabei in ein in das Zangenmaul des Zangenwerkzeugs einlegbares Hilfswerkzeug integriert, das bei Nichtgebrauch aus dem Zangenmaul herausgenommen wird.

Nachteilig bei solchen Hilfswerkzeugen ist, dass insbesondere eine für die Lebensdauer des Werkzeugs relevante Anzahl der mit dem Werkzeug durchgeführten Betätigungen nicht eindeutig nachvollzogen werden kann, da bei Nichteinsatz des Hilfswerkzeugs die Betätigung des Zangenwerkzeugs nicht gezählt wird. Darüber hinaus ist zum Betrieb des Hilfswerkzeugs ein Akkumulator oder eine Batterie erforderlich.

Bei der DE 20 2014 105 571 U1 ist die elektronische Zähleinrichtung in einem der Zangengriffe festgelegt. Zur Energieversorgung wird hier ein Energie-Harvesting-Modul in Gestalt eines Piezo-Elements eingesetzt, dass bei Bewegung der Zangengriffe in ihre Schließstellung ein Mehrkant durch Herunterdrücken eines Kipphebels um einen Winkel verdreht wird und dabei auf ein Piezoelement drückt.

Aus der DE 10 2007 050 176 A1 ist eine batterie- oder durch einen Akkumulator betriebene mobile Crimpvorrichtung bekannt, die ein Piezo-Element zur Messung der während eines Arbeitshubs auf ein Crimp-Kontaktelement ausgeübte Kraft einsetzt. Weiter wird in dieser Druckschrift auch vorgeschlagen, anstelle oder zusätzlich zur Kraftmessung eine Wegmessung zum Messen des von dem Crimpstempel während jedes Arbeitshubes in Bezug auf eine Crimpaufnahme zurückgelegten Weges bereitszustellen.

Aufgabe der vorliegenden Erfindung ist es, ein handbetätigbares Zangenwerkzeug mit einer elektronischen Überwachungseinheit bereitzustellen, dessen Nutzung zuverlässig und energieautark überwachbar ist.

Diese Aufgabe wird durch ein handbetätigbares Zangenwerkzeug mit den Merkmalen des Anspruchs 1 gelöst.

Das erfindungsgemäße handbetätigbare Zangenwerkzeug, insbesondere zur Verarbeitung von Kabeln weist einen Zangenkopf zum Be- oder Verarbeiten eines Werkstücks, insbesondere eines Kabels, auf sowie zwei relativ zueinander zwischen einer Öffnungsstellung und einer Schließstellung verschwenkbare Zangengriffe.

An einem ersten der Zangengriffe ist eine elektronische Überwachungseinheit angeordnet, mit der zumindest die Anzahl der Be- oder Verarbeitungsvorgänge zählbar und speicherbar ist.

Die Überwachungseinheit weist eine Elektronikschaltung und einen durch Betätigung des Zangenwerkzeugs Betätigungssignale an die Elektronikschaltung ausgebenden Signalgeber auf.

Der Signalgeber weist ein Energy-Harvesting-Modul zur Energieversorgung der Überwachungseinheit und eine den Signalgeber aktivierende Betätigungsmechanik auf.

Die Überwachungseinheit ist dabei als durch Betätigung der Betätigungsmechanik und des Energy-Harvesting-Moduls aktivierbare Verschleißberechnungseinheit ausgebildet, wobei die Überwachungseinheit eine mit der Elektronikschaltung gekoppelte erste Messeinheit zur Erfassung einer bei Betätigung des Zangenwerkzeugs ausgeübten Zuspannkraft und eine mit der Elektronikschaltung gekoppelte zweite Messeinheit zur Erfassung einer bei Betätigung des Zangenwerkzeugs zurückgelegten Betätigungsweges aufweist, wobei das Energy-Harvesting-Modul die zweite Messeinheit ist.

Mit einem derart ausgebildeten handbetätigbaren Zangenwerkzeug ist in einfacher Weise eine Überwachung insbesondere der Anzahl der durchgeführten Betätigungsvorgänge ermöglicht.

Durch den Einsatz eines solchen Energy-Harvesting-Moduls ist das Weglassen von Batterien oder Akkumulatoren oder eines externen Energieversorgungsanschlusses ermöglicht, da mithilfe des Energy-Harvesting-Moduls insbesondere die von einem Benutzer des Zangenwerkzeugs beim Zudrücken des Zangenwerkzeugs aufgebrachte Kraft neben der Bearbeitung des Werkstücks durch das Zangenwerkzeug zur Energieversorgung der Überwachungseinheit genutzt wird. Jeder Spannungsimpuls des Harvesting-Modules wird dabei als Trigger für das Zählen der Be- oder Verarbeitungsvorgänge genutzt.

Die erste Messeinheit ermöglicht insbesondere eine Gewichtung der einzelnen Betätigungen, wobei größere Zuspannkraftswerte die Lebensdauer des Zangenwerkzeugs insgesamt verkürzen.

Die zweite Messeinheit ermöglicht insbesondere im Fall einer als Crimpzange ausgebildeten Zangenwerkzeugs eine Beurteilung der Crimpqualität jedes einzelnen Crimpvorgangs, wobei aus der gemessenen Zuspannkraft und dem dabei zurückgelegten Zuspannweg durch Vergleich mit einer in einem Speicher der Überwachungseinheit abgelegten vordefinierten Sollwerten die Qualität des Crimps beurteilt werden und entsprechend ein Ausgabesignal ausgegeben oder nicht flüchtig abgespeichert werden kann.

Vorteilhafte Ausführungsvarianten der Erfindung sind Gegenstand der Unteransprüche.

Gemäß einer vorteilhaften Ausführungsvariante der Erfindung ist die die Betätigungsmechanik derart mit dem Energy-Harvesting-Modul gekoppelt, dass zumindest ein Teilstück eines Betätigungsweges der Betätigungsmechanik von dem Energy-Harvesting-Modul zur Energiegewinnung verwertbar ist.

So ist es denkbar, die Betätigungsmechanik so mit dem Energy-Harvesting-Modul zu koppeln, dass erst kurz vor Ende eines Schließvorgangs des Zangenwerkzeugs eine Kopplung erfolgt.

Denkbar ist auch, den gesamten Schließweg der Zangengriffe zueinander zur Energieerzeugung durch das Energy-Harvesting-Modul auszunutzen und so einen höheren Energiebetrag zu ernten.

Die Betätigungsmechanik weist gemäß einer bevorzugten Ausführungsvariante einen an dem ersten der Zangengriffe durch Verschwenken der Zangengriffe in ihre Schließstellung verschiebbar gehaltenen Betätigungsstößel auf, der mit einem Betätigungshebel des Energy-Harvesting-Moduls gekoppelt ist.

Nach einer weiteren Ausführungsvariante ist die Überwachungseinheit in einem an dem ersten der Zangengriffe abnehmbar befestigten Gehäuse aufgenommen.

Denkbar ist auch, ein Gehäuse des ersten der Zangengriffe so zu formen, dass die Überwachungseinheit in dem Zangengriffgehäuse aufnehmbar ist.

Dies ermöglicht ein einfach durchzuführendes Aufrüsten eines Zangenwerkzeugs mit einer solchen Überwachungseinheit.

Der Betätigungsstößel ist gemäß einer bevorzugten Ausführungsvariante mit einem ersten Schenkel einer verschwenkbar am Gehäuse gelagerten Schenkelfeder gekoppelt, wobei ein zweiter Schenkel der Schenkelfeder an einem in einer Aufnahmenut des Gehäuses verschiebbar gelagerten Schieber festgelegt ist, an dem der Betätigungshebel des Energy-Harvesting-Moduls befestigt ist.

Dies ermöglicht eine einfache und zuverlässige Übertragung der Bewegung des einen der Zangengriffe auf den Betätigungshebel des Energy-Harvesting-Moduls.

Das Energy-Harvesting-Modul ist gemäß einer Ausführungsvariante als induktives Modul ausgebildet. In diesem Fall dient der Betätigungshebel des Energy-Harvesting-Moduls insbesondere der Relativbewegung eines Permanentmagneten zu einer Spule des Energy-Harvesting-Moduls.

Denkbar ist auch, das Energy-Harvesting-Modul als piezoelektrisches Modul auszubilden. In diesem Falle dient der Betätigungshebel als Druckstück zur Druckbeaufschlagung eines Piezokristalls.

Denkbar ist auch die Ausbildung des Energy-Harvesting-Moduls als kapazitives Modul oder auch als Modul auf Basis einer Solarzelle, eines thermoelektrischen Generators oder dergleichen.

So lassen sich aus einer Vielzahl unterschiedlicher Energy-Harvesting-Module hinreichend große Energieimpulse zur Aktivierung der Elektronikschaltung nutzen.

Die Elektronikschaltung weist gemäß einer bevorzugten Ausführungsvariante eine oder mehrere Ausgabeeinrichtungen für Informationen, insbesondere eine oder mehrere Anzeigevorrichtungen wie eine LED, ein LCD oder ePaper Display auf, mit denen dem Benutzer bei Betätigung des Zangenwerkzeugs eine direkte, insbesondere optische Rückmeldung ausgegeben werden kann.

Nach einer Ausführungsvariante der Erfindung ist die Überwachungseinheit als durch Betätigung der Betätigungsmechanik und des Energy-Harvesting-Moduls aktivierbare Zähleinheit ausgebildet, mit der die Anzahl der durchgeführten Betätigungsvorgänge zählbar ist.

So ist dadurch beispielsweise ermöglicht, bei Erreichen eines vorgegebenen Betätigungswertes eine Information über das Erreichen eines Lebensdauerwerts des Zangenwerkzeugs auszugeben.

Diese erste Messeinheit zur Erfassung einer bei Betätigung des Zangenwerkzeugs ausgeübten Zuspannkraft ist dabei bevorzugt im Bereich des Zangenkopfes angeordnet.

Die Elektronikschaltung ist bevorzugt dazu ausgelegt, aus den gemessenen Zuspannkraftswerten und der Anzahl der durchgeführten Betätigungen des Zangenwerkzeugs einen Lebensdauerwert des Zangenwerkzeugs zu berechnen.

Die zweite Messeinheit besteht dabei vorzugsweise aus mehreren einzeln hintereinander geschalteten Harvesting-Modulen, deren Spannungsimpuls bei Betätigen des Werkzeugs als Trigger für einen bestimmten Betätigungsweg genutzt werden.

Das Energie-Harvesting-Modul erzeugt z. B. in äquidistanten Abschnitten des Crimpweges Energieimpulse, bei denen die Elektronik die Zugspannkraftwerte aufnehmen und zu einer Kennlinie zusammenführen kann.

Die Elektronikschaltung ist bevorzugt dazu ausgelegt, aus dem gemessenen Zuspannkrafts- und dem Betätigungsweg einer Betätigung des Zangenwerkzeugs einen Qualitätsprüfwert des Betätigungsvorgangs zu berechnen. Nachfolgend wird eine Ausführungsvariante eines erfindungsgemäßen handbetätigbaren Zangenwerkzeugs anhand der beiliegenden Zeichnungen näher erläutert. Es zeigen:
- Figur 1: eine schematische perspektivische Ansicht einer Ausführungsvariante eines handbetätigbaren Zangenwerkzeugs mit an einem der Zangengriffe angebrachte elektronischen Überwachungseinheit,
- Figur 2: eine perspektivische Darstellung des Zangenwerkzeugs gemäß Figur 1 mit geöffnetem Gehäuse der Überwachungseinheit,
- Figur 3: eine Schnittdarstellung der Überwachungseinheit im nicht betätigten Zustand des Energy-Harvesting-Moduls und
- Figur 4: eine der Figur 3 entsprechende Schnittdarstellung der Überwachungseinheit im betätigten Zustand des Energy-HarvestingModuls.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Zangenwerkzeugs, Zangenkopfs, Zangengriffs, der Überwachungseinheit, des Energy-Harvesting-Moduls und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

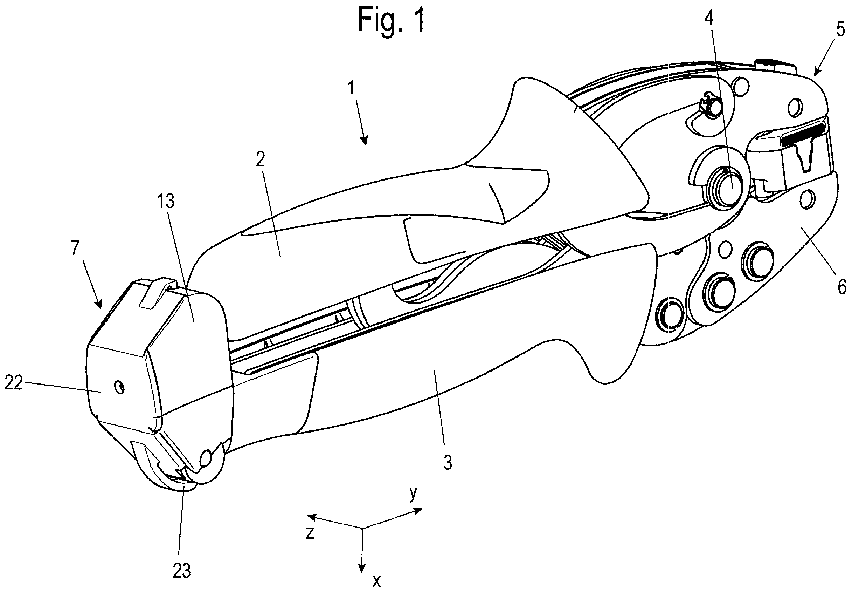

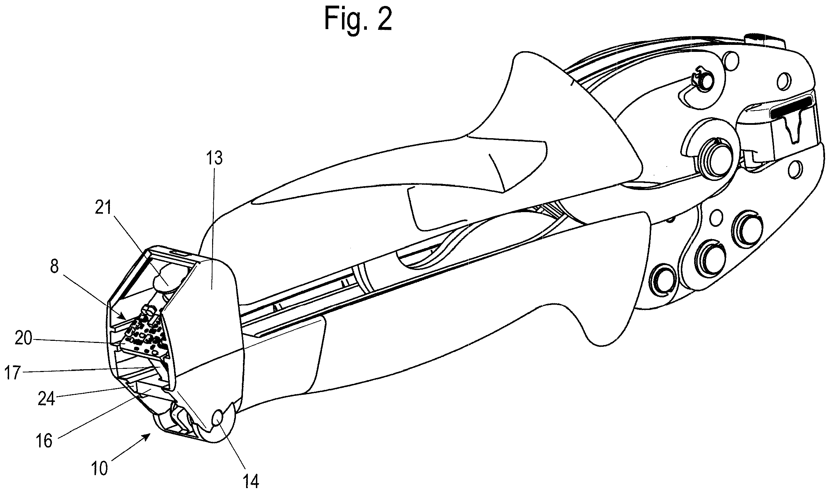

In den Figuren 1 und 2 ist mit dem Bezugszeichen 1 insgesamt eine Ausführungsvariante eines erfindungsgemäßen handbetätigbaren Zangenwerkzeugs, insbesondere zur Verarbeitung von Kabeln, hier in Gestalt einer Crimpzange, bezeichnet. Das Zangenwerkzeug 1 weist zwei Zangengriffe 2, 3 und einen Zangenkopf 5 zum Be- oder Verarbeiten eines Kabels oder elektrischen Leiters auf. Die Zangengriffe 2, 3 sind dabei über ein Drehlager 4 relativ zueinander verschwenkbar.

Neben der Ausgestaltung des Zangenwerkzeugs 1 als hier gezeigte Crimpzange zum Vercrimpen eines Kabels oder Leiters ist es auch denkbar, das Zangenwerkzeug 1 als Abisolierzange, Schneidwerkzeug oder dergleichen auszubilden.

Durch Zusammendrücken der Zangengriffe 2, 3 durch die Hand eines Benutzers wird der erste, in den Figuren 1 und 2 untere Zangengriff 3, der mit einer unteren Klemmbacke 6 verbunden ist, nach oben geschwenkt. Dabei wird eine Knebelmechanik gestreckt, so dass die Klemmbacke 6 um das Drehlager 4 derart geschwenkt wird, dass sich das Zangenmaul des Zangenkopfes 5 des Zangenwerkzeugs 1 schließt.

Am von dem Zangenkopf 5 beabstandeten Ende des unteren Zangengriffes 3 ist, wie in den Figuren 1 und 2 des Weiteren erkennbar, eine elektronische Überwachungseinheit 7 lösbar befestigt angeordnet.

Die Überwachungseinheit 7 ist dabei von einem Gehäuse 13 und einem eine Gehäuseöffnung verschließenden Gehäusedeckel 22 umschlossen. An dem Gehäusedeckel 22 ist eine Verschlussnase 23 angeformt, mit der der Gehäusedeckel 22 in seiner Schließstellung arretierbar ist.

Wie in den Figuren 2, 3 und 4 gezeigt ist, weist die Überwachungseinheit 7 eine Elektronikschaltung 8 und einen durch Betätigung des Zangenwerkzeugs 1 Betätigungssignale an die Elektronikschaltung 8 ausgebenden Signalgeber auf.

Dieser Signalgeber weist ein Energy-Harvesting-Modul 9 auf, das der Energieversorgung der Überwachungseinheit 7 dient und eine den Signalgeber aktivierende Betätigungsmechanik 10. Denkbar ist auch, dass das Energy-Harvesting-Modul 9 selbst eine solche Betätigungsmechanik aufweist.

Das Energy-Harvesting-Modul 9 ist bei der hier dargestellten Ausführungsvariante als induktives Modul ausgebildet, das über einen Betätigungshebel 17 zur Umwandlung mechanischer in elektrische Energie mit einer Betätigungsmechanik 10 gekoppelt ist.

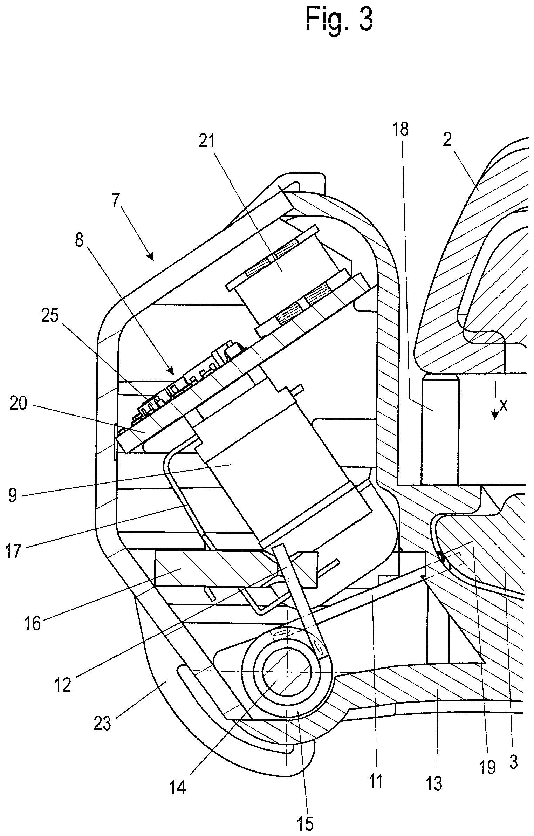

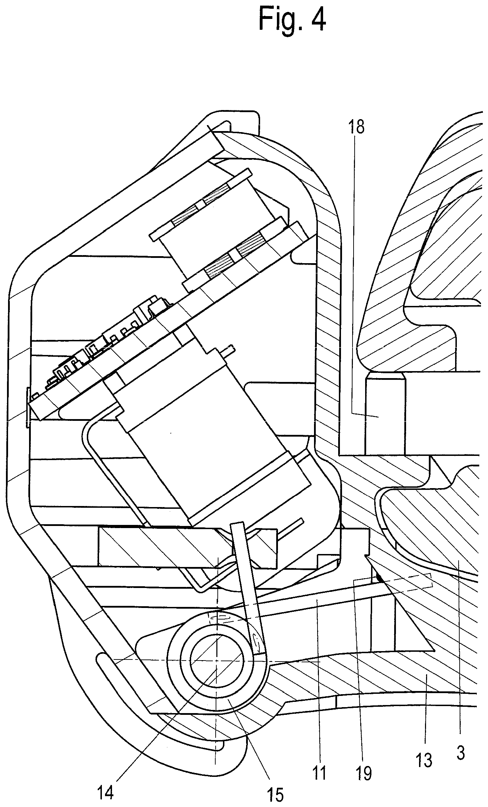

Figur 3 zeigt dabei die Überwachungseinheit 7 im unbetätigten Zustand vor dem Zusammendrücken der Zangengriffe 2, 3, während Figur 4 die Überwachungseinheit 7 mit der Betätigungsmechanik 10 im betätigten Zustand bei zusammengedrückten Zangengriffen 2, 3 zeigt.

Wie in den Figuren 3 und 4 dargestellt, weist die Betätigungsmechanik 10 einen Betätigungsstößel 18 auf, der an dem ersten der Zangengriffe, hier dem unteren Zangengriff 3, verschiebbar fest gelagert ist und durch Zusammendrücken der Zangengriffe 2, 3 in einen Innenraum des unteren Zangengriffes 3 eingedrückt wird.

Der Betätigungsstößel 18 ist dabei mit einem ersten Schenkel 11 einer Schenkelfeder 15 gekoppelt. Die Kopplung erfolgt hier über einen senkrecht zur Bewegungsachse des Betätigungsstößels 18 im Betätigungsstößel 18 angeordneten Spannstift, der den ersten Schenkel 11 beim Bewegung in Schließrichtung x mitnimmt. Die Schenkelfeder 15 ist auf einem hier als Stift ausgebildeten Drehlager 14 drehbar gelagert.

Das Drehlager 14 erstreckt sich dabei senkrecht zur Schließrichtung x in einer Richtung z in einer dazu vorgesehenen Aufnahme im Gehäuse 13 der Überwachungseinheit 7.

Ein zweiter Schenkel 12 der Schenkelfeder 15 ist an einem hier in Längserstreckungsrichtung y des Zangenwerkzeugs 1 verschiebbar in einer Aufnahmenut 24 des Gehäuses 13 der Überwachungseinheit 7 gelagerten Schiebers 16 festgelegt.

Dadurch bewirkt eine Verschwenkung des ersten Schenkels 11 eine Verschwenkung des zweiten Schenkels 12 und damit eine Verschiebung des Schiebers 16.

Die Schenkelfeder 15 der Betätigungsmechanik 10 dient darüber hinaus der Pufferung eines Überhubs des Betätigungsstößels, beispielsweise ausgelöst durch unterschiedliche Crimpgrößen im Falle eines als Crimpzange ausgebildeten Zangenwerkzeugs 1.

Die Schenkelfeder 15 vereinfacht darüber hinaus das anschließende Bewegen der Zangengriffe 2, 3 zueinander in Öffnungsrichtung.

Der Schieber 16 ist am Betätigungshebel 17 des Energy-Harvesting-Moduls 9 festgelegt, so dass die Verschiebung des Schiebers 16 mit einer Aktivierung des Energy-Harvesting-Moduls 9 einhergeht und die Bewegungsenergie in elektrische Energie umwandelt.

Das Energy-Harvesting-Modul 9 ist elektrisch mit der Elektronikschaltung 8, insbesondere einer Platine 20 der Elektronikschaltung 8 verbunden.

Die Bewegung des Schiebers 16 beim Zudrücken der Zangengriffe 2, 3 bewirkt eine Bewegung des Betätigungshebels 17 des Energy-Harvesting-Moduls 9, wobei das Energy-Harvesting-Modul 9 diese Bewegungsenergie in elektrische Energie umwandelt und an die Elektronikschaltung 8 einen Energieimpuls ausgibt, der einen Mikroprozessor der Elektronikschaltung 8 startet und über die auf dem Mikroprozessor gespeicherte Software einen Zählspeicher um ein Inkrement erhöht.

Da die bei dem Energy-Harvesting-Vorgang erzeugte elektrische Energie meist deutlich größer als die vom Prozessor benötigte ist, wird zumindest ein Teil der verbleibenden elektrische Energie vorzugsweise zur Aktivierung einer Ausgabeeinrichtung für Informationen wie insbesondere eine oder mehrere LEDs genutzt.

Die Elektronikschaltung 8 weist des Weiteren bevorzugt ein über die eingespeiste Energie des Energy-Harvesting-Moduls 9 aktivierbares Nahfeldkommunikations-Modul auf, insbesondere ein sogenanntes NFC-Modul, mit einer als Antenne dienenden Spule 21, mit der die in einem Datenspeicher der Elektronikschaltung 8 vorhandenen Daten an ein mobiles Auslesegerät, beispielsweise ein Smartphone, drahtlos übermittelt werden können. Aufgrund der zum Auslesen des Datenspeichers energieautarken Arbeitsweise eignet sich hier die Nahfeldkommunikation (NFC).

Nach einer weiteren hier nicht weiter dargestellten Ausführungsvariante, bei der die Überwachungseinheit 7 als durch Betätigung der Betätigungsmechanik 10 und des Energy-Harvesting-Moduls 9 aktivierbare Verschleißberechnungseinheit ausgebildet ist, weist die Überwachungseinheit 7 eine mit der Elektronikschaltung 8 gekoppelte erste Messeinheit zur Erfassung einer bei Betätigung des Zangenwerkzeugs 1 ausgeübten Zuspannkraft aus.

Diese Messeinheit ist dabei bevorzugt im Bereich des Zangenkopfes am Zangenwerkzeug 1 angeordnet. Denkbar ist aber auch die Anordnung dieser ersten Messeinheit an anderer geeigneter Stelle des Zangenwerkzeugs 1.

Dadurch ist die bei einem Betätigungsvorgang maximal ausgeübte Kraft durch die Hand des Benutzers messbar, die in der Elektronikeinheit in die Berechnung eines Lebensdauerwertes einfließt, der auf einem Datenspeicher der Elektronikschaltung 8 abspeicherbar ist.

In dem Datenspeicher ist vorzugsweise ein Wert für eine maximale Lebensdauer des Zangenwerkzeugs 1 abgespeichert, so dass durch Vergleich dieses maximalen Lebensdauerwertes mit einem aktuellen Nutzungswert des Zangenwerkzeugs 1, der aus der Summe der durchgeführten Betätigungen und dessen Gewichtung über die Kraftmessung des einzelnen Betätigungsvorgangs berechnet wird, eine Überprüfung ermöglicht, ob der Lebensdauerwert den Wert für die maximale Lebensdauer erreicht hat.

Bei Erreichen der maximalen Lebensdauer kann so über die Ausgabeeinheit ein entsprechendes Signal an den Benutzer ausgegeben werden.

In einer weiteren Ausführungsvariante des erfindungsgemäßen Zangenwerkzeugs 1 weist die Überwachungseinheit 7 zusätzlich eine mit der Elektronikschaltung 8 gekoppelte zweite Messeinheit auf, die der Erfassung einer bei Betätigung des Zangenwerkzeugs 1 zurückgelegten Betätigungsweges dient.

Die Messung des Betätigungsweges zusammen mit der Messung der aufgewandten Zuspannkraft ermöglicht die Berechnung eines Qualitätsprüfwertes, beispielsweise zur qualitativen Überprüfung eines Crimps, wobei der gemessene Qualitätsprüfwert bzw. eine aus mehreren solcher Qualitätsprüfwerte berechneten Qualitätsprüfkurve mit einem abgespeicherten Sollwert bzw. Sollkurve verglichen wird.

Die zweite Messeinheit besteht dabei vorzugsweise aus mehreren einzeln hintereinander geschaltete Harvesting-Modulen, deren Spannungsimpuls bei Betätigen des Werkzeugs als Trigger für einen bestimmten Betätigungsweg genutzt werden.

Mit jedem Erntevorgang wird ein Kraftwert gespeichert, der dann in eine Kurve umgerechnet wird. Die so erhaltene Kurve kann anschließend mit einer Vorgabekurve verglichen werden.

Denkbar ist auch der des Energy-Harvesting-Moduls 9 selbst als Wegsensor. Dazu erzeugt das Energy-Harvesting-Modul 9 beispielsweise in äquidistanten Abschnitten des Betätigungsweges des Zangenwerkzeugs 1 Energieimpulse, bei denen die Elektronikschaltung die Zuspannkraftwerte und Wegpunkte aufnehmen und zu einer Kennlinie zusammen führen kann.

Ebenfalls denkbar ist der Einsatz eines einzelnen weiteren Energy-Harvesting-Moduls.

Neben der Ausgestaltung des Energy-Harvesting-Moduls 9 als induktives Modul ist es auch denkbar, das Energy-Harvesting-Modul 9 als kapazitives oder piezoelektrisches Modul oder als Modul auf Basis thermischer Energie oder dergleichen auszubilden.

### Bezugszeichenliste

- 1: Zangenwerkzeug
- 2: oberer Zangengriff
- 3: unterer Zangengriff
- 4: Drehlager
- 5: Zangenkopf
- 6: Klemmbacke
- 7: Überwachungseinheit
- 8: Elektronikschaltung
- 9: Energy-Harvesting-Modul
- 10: Betätigungsmechanik
- 11: erster Schenkel
- 12: zweiter Schenkel
- 13: Gehäuse
- 14: Drehlager
- 15: Schenkelfeder
- 16: Schieber
- 17: Betätigungshebel
- 18: Betätigungsstößel
- 19: Spannstift
- 20: Platine
- 21: Antenne
- 22: Abdeckung
- 23: Rastelement
- 24: Aufnahmennut

- x: Schließrichtung
- y: Längserstreckungsrichtung des Zangenwerkzeugs
- z: Tiefe des Zangenwerkzeugs

## Patentansprüche

1. Handbetätigbares Zangenwerkzeug (1), insbesondere zur Verarbeitung von Kabeln, aufweisend:
a. einen Zangenkopf (5) zum Be- oder Verarbeiten eines Werkstücks, insbesondere eines Kabels,
b. zwei relativ zueinander zwischen einer Öffnungsstellung und einer Schließstellung verschwenkbare Zangengriffe (2, 3),
c. eine an einem ersten der Zangengriffe (2, 3) angeordnete elektronische Überwachungseinheit (7), mit der zumindest die Anzahl der Be- oder Verarbeitungsvorgänge zählbar und speicherbar ist,
d. wobei die Überwachungseinheit (7) eine Elektronikschaltung (8) und einen durch Betätigung des Zangenwerkzeugs (1) Betätigungssignale an die Elektronikschaltung (8) ausgebenden Signalgeber aufweist,
e. wobei der Signalgeber ein Energy-Harvesting-Modul (9) zur Energieversorgung der Überwachungseinheit (7) und eine den Signalgeber aktivierende Betätigungsmechanik (10) aufweist,
f. wobei die Überwachungseinheit (7) als durch Betätigung der Betätigungsmechanik (10) und des Energy-Harvesting-Moduls (9) aktivierbare Verschleißberechnungseinheit ausgebildet ist,
**dadurch gekennzeichnet, dass** die Überwachungseinheit (7) eine mit der Elektronikschaltung (8) gekoppelte erste Messeinheit zur Erfassung einer bei Betätigung des Zangenwerkzeugs (1) ausgeübten Zuspannkraft aufweist,
g. dass die Überwachungseinheit (7) eine mit der Elektronikschaltung (8) gekoppelte zweite Messeinheit zur Erfassung einer bei Betätigung des Zangenwerkzeugs (1) zurückgelegten Betätigungsweges aufweist,
und dass das Energy-Harvesting-Modul (9) die zweite Messeinheit ist.

2. Zangenwerkzeug (1) nach Anspruch 1, **dadurch gekennzeichnet, dass** die Betätigungsmechanik (10) derart mit dem Energy-Harvesting-Modul (9) gekoppelt ist, dass zumindest ein Teilstück eines Betätigungsweges der Betätigungsmechanik (10) von dem Energy-Harvesting-Modul (9) verwertbar ist.

3. Zangenwerkzeug (1) nach Anspruch 1 oder 2, **dadurch gekennzeichnet, dass** die Betätigungsmechanik (10) einen an dem ersten der Zangengriffe (2, 3) durch Verschwenken der Zangengriffe (2, 3) in ihre Schließstellung verschiebbar gehaltenen Betätigungsstößel (18) aufweist, der mit einem Betätigungshebel (17) des Energy-Harvesting-Moduls (9) gekoppelt ist.

4. Zangenwerkzeug (1) nach einem der vorstehenden Ansprüche, **dadurch gekennzeichnet, dass** die Überwachungseinheit (7) in einem an dem ersten der Zangengriffe (2, 3) abnehmbar befestigten Gehäuse (13) aufgenommen ist.

5. Zangenwerkzeug (1) nach Anspruch 4, **dadurch gekennzeichnet, dass** der Betätigungsstößel (18) mit einem ersten Schenkel (11) einer verschwenkbar am Gehäuse (13) gelagerten Schenkelfeder (15) gekoppelt ist, wobei ein zweiter Schenkel (12) der Schenkelfeder (15) an einem in einer Aufnahmenut (24) des Gehäuses (13) verschiebbar gelagerten Schieber (16) festgelegt ist, an dem der Betätigungshebel (17) des Energy-Harvesting-Moduls (9) befestigt ist.

6. Zangenwerkzeug (1) nach einem der vorstehenden Ansprüche, **dadurch gekennzeichnet, dass** das Energy-Harvesting-Modul (9) als induktives, piezoelektrisches oder kapazitives Modul ausgebildet ist.

7. Zangenwerkzeug (1) nach einem der vorstehenden Ansprüche, **dadurch gekennzeichnet, dass** die Elektronikschaltung (8) eine oder mehrere Ausgabeeinrichtungen (10, 14) für Informationen, insbesondere eine oder mehrere Anzeigevorrichtungen wie eine LED aufweist.

8. Zangenwerkzeug (1) nach einem der vorstehenden Ansprüche, **dadurch gekennzeichnet, dass** die Überwachungseinheit (7) als durch Betätigung der Betätigungsmechanik (10) und des Energy-Harvesting-Moduls (9) aktivierbare Zähleinheit ausgebildet ist.

9. Zangenwerkzeug (1) nach einem der vorstehenden Ansprüche, **dadurch gekennzeichnet, dass** die erste Messeinheit zur Erfassung einer bei Betätigung des Zangenwerkzeugs (1) ausgeübten Zuspannkraft im Bereich des Zangenkopfes (5) angeordnet ist.

10. Zangenwerkzeug (1) nach einem der vorstehenden Ansprüche, **dadurch gekennzeichnet, dass** die Elektronikschaltung (8) dazu ausgelegt ist, aus den gemessenen Zuspannkraftswerten und der Anzahl der durchgeführten Betätigungen des Zangenwerkzeugs (1) einen Lebensdauerwert des Zangenwerkzeugs (1) zu berechnen.

11. Zangenwerkzeug (1) nach einem der vorstehenden Ansprüche, **dadurch gekennzeichnet, dass** die Elektronikschaltung (8) dazu ausgelegt ist, aus dem gemessenen Zuspannkraftswert und dem Betätigungsweg einer Betätigung des Zangenwerkzeugs (1) einen Qualitätsprüfwert des Betätigungsvorgangs zu berechnen.

12. Zangenwerkzeug (1) nach einem oder mehreren der vorstehenden Ansprüche, **dadurch gekennzeichnet, dass** das Zangenwerkzeug (1) als Crimpzange oder Abisolierzange ausgebildet ist.

## Claims

1. A hand-actuatable plier tool (1), in particular for processing cables, having:
a. a plier head (5) for handling or processing a workpiece, in particular a cable,
b. two plier handles (2, 3) that can be pivoted relative to one another between an open position and a closed position,
c. an electronic monitoring unit (7) arranged on a first of the plier handles (2, 3) and with which at least the number of handling or processing procedures can be counted and stored,
d. wherein the monitoring unit (7) has an electronic circuit (8) and a signal transmitter emitting actuation signals to the electronic circuit (8) when the plier tool (1) is actuated,
e. wherein the signal transmitter has an energy harvesting module (9) for supplying energy to the monitoring unit (7) and an actuation mechanism (10) activating the signal transmitter,
f. wherein the monitoring unit (7) is designed as a wear calculation unit which can be activated by actuation of the actuation mechanism (10) and the energy harvesting module (9),
**characterized in that**
the monitoring unit (7) comprises a first measuring unit coupled to the electronic circuit (8) for detecting a clamping force exerted when the plier tool (1) is actuated,
g. **in that** the monitoring unit (7) has a second measuring unit coupled to the electronic circuit (8) for detecting an actuation distance covered when the plier tool (1) is actuated, and **in that** the energy harvesting module (9) is the second measuring unit.

2. The plier tool (1) according to Claim 1, **characterized in that** the actuation mechanism (10) is coupled to the energy harvesting module (9) in such a manner that at least a section of an actuation distance of the actuation mechanism (10) can be used by the energy harvesting module (9).

3. The plier tool (1) according to Claim 1 or 2, **characterized in that** the actuation mechanism (10) has an actuation tappet (18) slidably held on the first of the plier handles (2, 3) with pivoting the plier handles (2, 3) into the closed position thereof and which is coupled with an actuation lever (17) of the energy harvesting module (9).

4. The plier tool (1) according to one of the preceding claims, **characterized in that** the monitoring unit (7) is received in a housing (13) which is detachably fastened on the first of the plier handles (2, 3).

5. The plier tool (1) according to Claim 4, **characterized in that** the actuation tappet (18) is coupled to a first leg (11) of a leg spring (15) which is pivotably mounted on the housing (13), wherein a second leg (12) of the leg spring (15) is secured on a slider (16) which is slidably mounted in a receiving groove (24) of the housing (13), on which the actuation lever (17) of the energy harvesting module (9) is fastened.

6. The plier tool (1) according to any one of the preceding claims, **characterized in that** the energy harvesting module (9) is designed as an inductive, piezoelectric or capacitive module.

7. The plier tool (1) according to any one of the preceding claims, **characterized in that** the electronic circuit (8) has one or more devices (10, 14) for outputting information, in particular one or more display devices such as an LED.

8. The plier tool (1) according to any one of the preceding claims, **characterized in that** the monitoring unit (7) is designed as a counting unit which can be activated by actuation of the actuation mechanism (10) and of the energy harvesting module (9).

9. The plier tool (1) according to any one of the preceding claims, **characterized in that** the first measuring unit for the acquisition of a clamping force exerted during the actuation of the plier tool (1) is arranged in the area of the plier head (5).

10. The plier tool (1) according to any one of the preceding claims, **characterized in that** the electronic circuit (8) is designed to calculate a useful life value of the plier tool (1) from the measured clamping force values and the number of actuations of the plier tool (1) performed.

11. The plier tool (1) according to any one of the preceding claims, **characterized in that** the electronic circuit (8) is designed to calculate a quality inspection value of the actuation procedure from the measured clamping force value and the actuation distance of an actuation of the plier tool (1).

12. The plier tool (1) according to one or more of the preceding claims, **characterized in that** the plier tool (1) is designed as crimping pliers or wire stripping pliers.

## Revendications

1. Pince (1) à actionnement manuel, en particulier pour le travail sur des câbles, présentant :
a. une tête de pince (5) pour travailler ou transformer une pièce d'oeuvre, en particulier un câble ;
b. deux poignées de pince (2, 3) pouvant pivoter l'une par rapport à l'autre entre une position ouverte et une position fermée ;
c. une unité de surveillance (7) électronique disposée sur une première des poignées de pince (2, 3), avec laquelle le nombre d'opérations de travail ou de transformation peut être compté et enregistré ;
d. dans laquelle l'unité de surveillance (7) présente un circuit électronique (8) et un émetteur de signaux qui émet des signaux d'actionnement vers le circuit électronique (8) quand la pince (1) est actionnée ;
e. dans laquelle l'émetteur de signaux est un module récupérateur d'énergie (9) pour l'alimentation en énergie de l'unité de surveillance (7) et présente un mécanisme d'actionnement (10) qui active l'émetteur de signaux ;
f. dans laquelle l'unité de surveillance (7) est conformée comme une unité de fermeture pouvant être activée par l'actionnement du mécanisme d'actionnement (10) et du module récupérateur d'énergie (9),
**caractérisée en ce que** l'unité de surveillance (7) comprend une première unité de mesure couplée au circuit électronique (8) pour capter une force de serrage exercée lors de l'actionnement de la pince (1),
g. **en ce que** l'unité de surveillance (7) présente une deuxième unité de mesure couplée au circuit électronique (8) pour détecter une course d'actionnement parcourue lors de l'actionnement de la pince (1), et **en ce que** le module récupérateur d'énergie (9) est la deuxième unité de mesure.

2. Pince (1) selon la revendication 1, **caractérisée en ce que** le mécanisme d'actionnement (10) est couplé avec le module récupérateur d'énergie (9) de telle façon qu'une partie au moins d'une course d'actionnement du mécanisme d'actionnement (10) puisse être exploitée par le module récupérateur d'énergie (9).

3. Pince (1) selon la revendication 1 ou 2, **caractérisée en ce que** le mécanisme d'actionnement (10) comprend un poussoir d'actionnement (18) retenu sur la première des poignées de pince (2, 3) avec possibilité de translation dans sa position de fermeture par le pivotement des poignées de pince (2, 3), qui est couplé avec un levier d'actionnement (17) du module récupérateur d'énergie (9).

4. Pince (1) selon l'une des revendications précédentes, **caractérisée en ce que** l'unité de surveillance (7) est logée dans un boîtier (13) pouvant être fixé de façon amovible sur la première des poignées de pince (2, 3).

5. Pince (1) selon la revendication 4, **caractérisée en ce que** le poussoir d'actionnement (18) est couplé avec un premier bras (11) d'un ressort à bras (15) supporté de façon pivotante sur le boîtier (13), un deuxième bras (12) du ressort à bras (15) étant fixé sur une coulisse (16) supportée avec possibilité de translation dans une gorge de logement (24) du boîtier (13), sur laquelle est fixé le levier d'actionnement (17) du module récupérateur d'énergie (9).

6. Pince (1) selon l'une des revendications précédentes, **caractérisée en ce que** le module récupérateur d'énergie (9) est conçu comme un module à induction, piézoélectrique ou capacitif.

7. Pince (1) selon l'une des revendications précédentes, **caractérisée en ce que** le circuit électronique (8) présente un ou plusieurs dispositifs de sortie (10, 14) pour des informations, en particulier un ou plusieurs dispositifs indicateurs tels qu'une DEL.

8. Pince (1) selon l'une des revendications précédentes, **caractérisée en ce que** l'unité de surveillance (7) est conformée comme une unité de comptage pouvant être activée par l'actionnement du mécanisme d'actionnement (10) et du module récupérateur d'énergie (9).

9. Pince (1) selon l'une des revendications précédentes, **caractérisée en ce que** la première unité de mesure pour capter une force de serrage exercée lors de l'actionnement de la pince (1) est disposée au niveau de la tête de pince (5).

10. Pince (1) selon l'une des revendications précédentes, **caractérisée en ce que** le circuit électronique (8) est conçu pour calculer une valeur de durée de vie de la pince (1) à partir des valeurs de force de serrage mesurées et du nombre d'actionnements de la pince (1) effectués.

11. Pince (1) selon l'une des revendications précédentes, **caractérisée en ce que** le circuit électronique (8) est conçu pour calculer une valeur de contrôle de qualité de l'opération d'actionnement à partir de la valeur de force de serrage mesurée et de la course d'actionnement d'un actionnement de la pince (1).

12. Pince (1) selon une ou plusieurs des revendications précédentes, **caractérisée en ce que** la pince (1) est conformée comme une pince à sertir ou une pince à dénuder.
